# EUROPÄISCHE PATENTSCHRIFT

(11) **EP 3 999 838 B1**
(45) Veröffentlichungstag und Bekanntmachung des Hinweises auf die Patenterteilung: **03.04.2024**
(21) Anmeldenummer: 20742178.5
(22) Anmeldetag: 07.07.2020
(51) Int. Cl.: G01N 21/41, G01N 21/59, G01N 21/47

(54) **VERFAHREN ZUR UNTERSUCHUNG VON SUBSTANZEN, COMPUTERPROGRAMMPRODUKT ZUR VERWENDUNG IN DIESEM VERFAHREN, SOWIE MOBILES ELEKTRONISCHES GERÄT**
METHOD FOR EXAMINING SUBSTANCES, COMPUTER PROGRAM PRODUCT FOR USE IN SAID METHOD, AND MOBILE ELECTRONIC DEVICE
PROCÉDÉ POUR ANALYSER DES SUBSTANCES, PRODUIT DE PROGRAMME INFORMATIQUE À UTILISER DANS CE PROCÉDÉ, ET APPAREIL ÉLECTRONIQUE MOBILE

(30) Priorität: 15.07.2019 DE 102019210405
(43) Veröffentlichungstag der Anmeldung: 25.05.2022
(73) Patentinhaber: COMPOLYTICS GmbH, 39179 Barleben (DE)
(72) Erfinder: SEIFFERT, Udo, 39179 Barleben (DE); BACKHAUS, Andreas, 39179 Barleben (DE); HERZOG, Andreas, 39106 Magdeburg (DE)
(74) Vertreter: Pfenning, Meinig & Partner mbB
(86) Internationale Anmeldenummer: PCT/EP2020/069053
(87) Internationale Veröffentlichungsnummer: WO 2021/008927

(56) Entgegenhaltungen:
- WO-A1-2018/080993
- CN-A- 105 342 985
- JP-A- 2006 001 056
- US-A- 5 756 885
- US-A1- 2005 170 097
- US-A1- 2019 136 070

## Beschreibung

Die vorliegende Erfindung betrifft ein Verfahren zur Untersuchung von Substanzen wie im beigefügten Anspruchssatz dargelegt.

Im Verfahren werden ein mobiles elektronisches Gerät, welches eine Kamera mit einer Kameralinse aufweist, sowie ein Testmuster bereitgestellt. Die zu untersuchende Substanz (oder eine Mischung der zu untersuchenden Substanz mit mindestens einem Hilfsstoff) wird mit der Kameralinse oder mit einem auf oder vor der Kameralinse angeordneten Schutzelement in Kontakt gebracht, so dass sich ein Film der zu untersuchenden Substanz bzw. der Mischung auf der Kameralinse bzw. dem Schutzelement bildet. Mithilfe der Kamera wird ein Bild des Testmusters aufgenommen, während sich der Film der zu untersuchenden Substanz bzw. der Mischung auf der Kameralinse bzw. dem Schutzelement befindet, wobei das aufgenommene Bild des Testmusters eine zumindest teilweise verzerrte Darstellung des Testmusters zeigt, wobei sich zumindest ein Teil von Texturmerkmalen und/oder Bildmerkmalen der zumindest teilweise verzerrten Darstellung des Testmusters von den entsprechenden Texturmerkmalen und/oder Bildmerkmalen des ursprünglichen Testmusters unterscheidet. Nachdem zumindest ein Teil der sich unterscheidenden Texturmerkmale und/oder Bildmerkmale aus dem aufgenommenen Bild des Testmusters extrahiert wurde, erfolgt eine Auswertung der extrahierten Texturmerkmale und/oder Bildmerkmale.

Typischerweise werden qualitative und quantitative Analysen unbekannter chemischer Substanzen mit geeigneten nasschemischen Verfahren durchgeführt. Diese sind in der Regel nicht echtzeitfähig, mit hohen Investitions- und Betriebskosten verbunden und einem Konsumenten nicht leicht zugänglich. Häufig wird ein Teil oder die gesamte verfügbare Probe dabei verbraucht. Darüber hinaus gibt es spektraloptische Verfahren, die auf Basis von Spektroskopie derartige Analysen in Echtzeit und nicht-invasiv (ohne Verbrauchen der Probe) ermöglichen. Allerdings sind auch hier spezielle Geräte erforderlich, die ebenfalls mit hohen Investitions- und Betriebskosten verbunden und ebenfalls einem Konsumenten nicht leicht zugänglich sind.

Die Verwendung von Smartphones über reine Kommunikationsanwendungen hinaus zur Verwendung als Messgerät/Tester lässt die Bestimmung von Inhaltsstoffen preiswerter und generell konsumententauglich werden. In diesem Kontext gibt es bereits spektraloptische Verfahren, die jedoch durch das Erfordernis externer optischer, mechanischer oder elektronischer Komponenten eine breite Nutzung durch den Konsumenten stark einschränken. In der WO 2018/115346 wird das Erfordernis externer Hardware zwar umgangen. Spektraloptische Verfahren in Form von Reflexionsmessung sind jedoch grundsätzlich für Flüssigkeiten durch den Phasenübergang von optisch unterschiedlich dichten Medien ungeeignet. Hinzu kommt, dass eine geeignete kalibrierte, breitbandige Lichtquelle und ein spektral bekannter und konstanter Reflektor erforderlich sind.

CN 105342985 B offenbart ein Testverfahren zur Untersuchung von einem Schmiermittel in Form eines Gelpräparates bei welchem ein Endoskop bzw. ein Gastroskop bereitgestellt wird. Das Schmiermittel wird auf das Kameraobjektiv des Gastroskops aufgetragen durch ein gleichmäßiges Beschichten des Kameraobjektivs mit einer 0,1 cm dicken Beschichtung des Schmiermittels und ein Schachbrett-Testmuster wird in einem Abstand vom 6 cm vom Kameraobjektiv positioniert. Das von der Kamera aufgenommene Bild des Testmusters bei der Beschichtung mit dem Gel wird danach bewertet bezüglich der Definition von Bänden in Abständen von 2 cm, 4 cm und 6 cm.

Ausgehend hiervon war es die Aufgabe der vorliegenden Erfindung ein Verfahren zur Untersuchung von Substanzen anzugeben, mit welchem insbesondere flüssige oder gelartige Substanzen auf möglichst einfache und kostengünstige Weise untersucht werden können.

Diese Aufgabe wird bezüglich eines Verfahrens mit den Merkmalen des Patentanspruchs 1, bezüglich eines Computerprogrammprodukts mit den Merkmalen des Patentanspruchs 14 und bezüglich eines mobilen elektronischen Geräts mit den Merkmalen des Patentanspruchs 15 gelöst.

Erfindungsgemäß wird somit ein Verfahren zur Untersuchung von Substanzen angegeben, bei welchem
i) ein mobiles elektronisches Gerät bereitgestellt wird, welches eine Kamera mit einer Kameralinse aufweist,
ii) ein Testmuster bereitgestellt wird,
iii) eine zu untersuchende Substanz oder eine Mischung einer zu untersuchenden Substanz und mindestens eines Hilfsstoffs mit der Kameralinse oder mit einem auf oder vor der Kameralinse angeordneten Schutzelement in Kontakt gebracht wird, so dass sich ein Film der zu untersuchenden Substanz bzw. der Mischung auf der Kameralinse bzw. dem Schutzelement bildet,
iv) mindestens ein Bild des Testmusters mithilfe der Kamera aufgenommen wird, während sich der Film der zu untersuchenden Substanz bzw. der Mischung auf der Kameralinse bzw. dem Schutzelement befindet, wobei das aufgenommene Bild des Testmusters eine zumindest teilweise verzerrte Darstellung des Testmusters zeigt, wobei sich zumindest ein Teil von Texturmerkmalen und/oder Bildmerkmalen der zumindest teilweise verzerrten Darstellung des Testmusters von den entsprechenden Texturmerkmalen und/oder Bildmerkmalen des ursprünglichen Testmusters unterscheidet,
v) zumindest ein Teil der sich unterscheidenden Texturmerkmale und/oder Bildmerkmale aus dem aufgenommenen Bild des Testmusters extrahiert wird, und
vi) eine Auswertung der extrahierten Texturmerkmale und/oder Bildmerkmale erfolgt.

Mit dem erfindungsgemäßen Verfahren können insbesondere (zumindest teilweise) flüssige und/oder (zumindest teilweise) gelartige Substanzen untersucht werden. Es können sowohl künstlich hergestellte Substanzen (z.B. Motoröl, kosmetische Cremes, Limonade) als auch natürliche Substanzen (z.B. Blut, Hauttalg, Schweiß, Pflanzenöl, Baumharz, Fruchtsaft) untersucht werden. Das Verfahren eignet sich jedoch prinzipiell auch zur Untersuchung fester Substanzen. Diese können beispielsweise vor Schritt ii) mit einem Lösungsmittel als Hilfsstoff vermischt werden, so dass sich eine Mischung bildet, die als Film auf die Kameralinse bzw. das Schutzelement aufgebracht werden kann.

In Schritt i) wird zunächst ein mobiles elektronisches Gerät bereitgestellt, welches eine Kamera mit einer Kameralinse aufweist. Die Kamera des mobilen elektronischen Geräts ist zur Aufnahme von Bildern geeignet. Die Kamera des mobilen elektronischen Geräts ist vorzugsweise in ein Gehäuse des mobilen elektronischen Geräts integriert. Das mobile elektronische Gerät weist vorzugsweise einen Bildschirm zum Anzeigen von Bildern auf. Der Bildschirm kann in das Gehäuse des mobilen elektronischen Geräts integriert sein. Bei dem mobilen elektronischen Gerät kann es sich beispielsweise um ein Smartphone oder einen Tablet-Computer handeln. Auch die Verwendung eines mobilen elektronischen Kameraapparates, z.B. einer Digitalkamera, als mobiles elektronisches Gerät ist möglich.

In Schritt ii) wird ein Testmuster bereitgestellt. Das Testmuster wird hierbei so bereitgestellt, dass mithilfe der Kamera des mobilen elektronischen Geräts ein Bild bzw. Foto des Testmusters aufgenommen werden kann. Prinzipiell kann das Testmuster in jeglicher Form bereitgestellt werden, z.B. als Darstellung auf einem Bildschirm oder als Darstellung oder Aufdruck auf einem Untergrund, wie z.B. einem Blatt Papier.

Vorzugsweise ist das Testmuster auf die Untersuchung der zu untersuchenden Substanz abgestimmt. Das Testmuster kann beispielsweise dadurch auf die Untersuchung der zu untersuchenden Substanz abgestimmt sein, dass das Testmuster auf die zu untersuchende Substanz selbst oder auf mindestens eine (z.B. bekannte und/oder zuvor bestimmte) Eigenschaft der zu untersuchenden Substanz abgestimmt ist. Zusätzlich oder alternativ kann das Testmuster aber auch auf das in Schritt v) durchgeführte Extrahieren, die Methode des Extrahierens oder einen Teilschritt dieses Extrahierens, und/oder auf die in Schritt vi) durchgeführte Auswertung, die Methode dieser Auswertung, oder einen Teilschritt dieser Auswertung abgestimmt sein.

In Schritt iii) wird eine zu untersuchende Substanz (oder eine Mischung einer zu untersuchenden Substanz mit einem Hilfsstoff, z.B. mit einem Lösungsmittel) mit der Kameralinse oder mit einem auf oder vor der Kameralinse angeordneten Schutzelement in Kontakt gebracht wird. Hierdurch kann eine gewisse Menge der zu untersuchenden Substanz (bzw. der Mischung) in Form eines Films auf der Kameralinse bzw. dem Schutzelement verbleiben. Die Kameralinse bzw. das Schutzelement kann somit zumindest teilweise (oder auch vollständig) mit dem Film der zu untersuchenden Substanz (bzw. der Mischung) bedeckt sein. In der Folge passieren die bei Aufnahme eines Bildes bzw. Fotos mit der Kamera in die Kameralinse einfallenden Lichtstrahlen zunächst den Film der zu untersuchende Substanz (bzw. der Mischung), bevor sie in die Kameralinse gelangen. Hierbei werden die in die Kameralinse einfallenden Lichtstrahlen durch die zu untersuchende Substanz beeinflusst. Die zu untersuchende Substanz wirkt somit als eine Art optischer Filter.

Der sich in Schritt iii) bildende Film der zu untersuchenden Substanz (bzw. der Mischung) weist vorzugsweise eine Transparenz von mindestens 10 %, bevorzugt mindestens 30 %, besonders bevorzugt mindestens 50 %, ganz besonders bevorzugt mindestens 70 %, für elektromagnetische Strahlung einer oder mehrere Wellenlängen im Wellenlängenbereich von 1 nm bis 100000 nm, bevorzugt elektromagnetische Strahlung einer oder mehrere Wellenlängen im Wellenlängenbereich von 10 nm bis 10000 nm, besonders bevorzugt für elektromagnetische Strahlung einer oder mehrere Wellenlängen im sichtbaren Wellenlängenbereich, im nahen UV-Bereich und im IR-Bereich, auf.

Unter dem Schutzelement wird ein Element verstanden, welches auf der Kameralinse bzw. vor der Kameralinse angebracht ist, um die Kameralinse vor äußeren Einflüssen zu schützen. Hierbei kann es sich beispielsweise um ein Schutzglas, eine Schutzscheibe oder eine Schutzfolie handeln. Das Schutzelement ist vorzugsweise zumindest teilweise durchlässig bzw. transparent für elektromagnetische Strahlung einer oder mehrere Wellenlängen im Wellenlängenbereich von 1 nm bis 100000 nm, vorzugsweise elektromagnetische Strahlung einer oder mehrere Wellenlängen im Wellenlängenbereich von 10 nm bis 10000 nm, besonders bevorzugt für elektromagnetische Strahlung einer oder mehrere Wellenlängen im sichtbaren Wellenlängenbereich, im nahen UV-Bereich und im IR-Bereich. Die genannte Durchlässigkeit bzw. Transparenz kann beispielsweise mindestens 50 %, vorzugsweise mindestens 70 %, besonders bevorzugt mindestens 90 %, betragen.

Vorzugsweise kann die zu untersuchende Substanz (bzw. die Mischung mit dem mindestens einen Hilfsstoff) dadurch mit der Kameralinse oder dem Schutzelement in Kontakt gebracht werden, dass die Kameralinse bzw. das Schutzelement auf die zu untersuchende Substanz (bzw. die Mischung) aufgelegt wird oder dass die zu untersuchende Substanz (bzw. die Mischung) mit einem Tuch auf die Kameralinse bzw. das Schutzelement übertragen wird.

In Schritt iv) wird dann mithilfe der Kamera des mobilen elektronischen Geräts mindestens ein Bild bzw. Foto des Testmusters aufgenommen, während sich der Film der zu untersuchenden Substanz (bzw. der Mischung) auf der Kameralinse bzw. dem Schutzelement befindet. Hierbei passieren die bei Aufnahme des Bildes bzw. Fotos mit der Kamera in die Kameralinse einfallenden Lichtstrahlen zunächst den (auf der Kameralinse bzw. dem Schutzelement befindlichen) Film der untersuchenden Substanz (bzw. der Mischung), bevor sie in die Kameralinse gelangen und werden dabei durch die zu untersuchende Substanz beeinflusst, z.B. zumindest teilweise abgelenkt, beispielsweise durch Brechung und/oder Beugung (Diffraktion) an der zu untersuchenden Substanz. Die zu untersuchende Substanz wirkt hierbei letztlich als eine Art optischer Filter. Durch diese Beeinflussung zeigt das aufgenommen Bild bzw. Foto des Testmusters eine zumindest teilweise verzerrte Darstellung des ursprünglichen (d.h. ursprünglich in Schritt ii) bereitgestellten) Testmusters. Hierbei unterscheidet sich zumindest ein Teil von Texturmerkmalen und/oder Bildmerkmalen der zumindest teilweise verzerrten Darstellung des Testmusters von den entsprechenden Texturmerkmalen und/oder Bildmerkmalen des ursprünglichen (d.h. ursprünglich in Schritt ii) bereitgestellten) Testmusters. Dies bedeutet, dass die Texturmerkmale und/oder Bildmerkmale der auf dem aufgenommenen Bild gezeigten Darstellung des Musters teilweise verschoben sind und/oder anders aussehen und/oder anders zueinander angeordnet sind als die entsprechenden Texturmerkmale und/oder Bildmerkmale des originalen/ursprünglichen Testmusters.

Bei Texturmerkmalen und/oder Bildmerkmalen kann es dabei beispielsweise um bestimmte Elemente des Musters handeln, wie z.B. Verlauf und/oder Länge bestimmter Linien des Musters; Verlauf und/oder Länge bestimmter Grenzen oder Kanten bestimmter Flächen oder Abschnitte des Musters; Abstand und/oder Position bestimmter Punkte des Musters zueinander oder zu bestimmten Linien oder Flächen des Musters; Form bestimmter Flächen des Musters; Schnittpunkte bestimmter Linien des Musters; Symmetrie des Musters oder bestimmter Abschnitte des Musters; Verlauf und/oder Position von Symmetrieachsen des Musters; Position von Symmetriepunkten des Musters.

In Schritt v) wird dann zumindest ein Teil der sich unterscheidenden Texturmerkmale und/oder Bildmerkmale - d.h. der Texturmerkmale und/oder Bildmerkmale der zumindest teilweise verzerrten Darstellung des Testmusters, die sich von den entsprechenden Texturmerkmalen und/oder Bildmerkmalen des ursprünglichen Testmusters unterscheiden - aus dem aufgenommenen Bild des Testmusters extrahiert. Dieses Extrahieren kann beispielsweise mithilfe einer Software erfolgen, z.B. einem auf dem mobilen elektronischen Gerät installierten Computerprogrammprodukt. Vor dem Extrahieren können die sich unterscheidenden Texturmerkmale und/oder Bildmerkmale zunächst bestimmt bzw. identifiziert werden, beispielsweise durch einen Vergleich des aufgenommenen Bildes mit dem ursprünglichen Testmuster (oder mit einem zusätzlich aufgenommenen Referenzbild). Auch dieses Bestimmen bzw. Identifizieren kann z.B. mithilfe der genannten Software erfolgen. Vorzugsweise werden solche Merkmale extrahiert, die sich deutlich in Abhängigkeit der durch die zu untersuchende Substanz verursachten Beeinflussung ändern. Als Nachweis erfolgt vorzugsweise die Berechnung der Änderung der Distanz von Merkmalshistogrammen (zwischen Messung einer Referenz - d.h. ohne Substanz - und Messung mit Substanz) oder im Falle einer punktförmigen Beleuchtung der Punktspreizfunktion (Point-Spread-Function). Eine deutliche Änderung ist beispielsweise dann gegeben, wenn in bestimmten Frequenzanteilen des aufgenommenen Bildes Artefakte (z.B. Verschiebungen von Punkten) auftreten, die genau durch die optischen Eigenschaften der als optischer Filter zu messenden Substanz hervorgerufen werden. Wenn bei der Messung ausschließlich Umgebungslicht verwendet wird, welches typischerweise recht homögen ist, existieren sehr viele Bildpunkte, die über ein Histogramm aggregiert werden können. Hiervon kann der Fall der punktförmigen Beleuchtung (z.B. durch Blitzlicht) unterschieden werden, bei welchem eine Punktspreizfunktion verwendet werden kann.

Besonders bevorzugte Bildfilter/Merkmale sind die Klasse derTexturmerkmale. Bei der bevorzugten Verwendung mehrerer Texturmerkmale können diese als aggregierter Merkmalsvektor zusammengestellt und vom nachfolgenden Algorithmus bewertet werden. Als Ergänzung können z.B. weitere Merkmalsfilter und Farbhistogramme explizit bzw. durch im Rahmen von maschinellem Lernen, insbesondere Deep Learning, implizit erlangte Filtermasken, z.B. als Schichten in Convolutional Neural Networks verwendet werden.

Vorzugsweise ist das in Schritt v) erfolgende Extrahieren der Texturmerkmale und/oder Bildmerkmale auf die Untersuchung der zu untersuchenden Substanz abgestimmt. Beispielsweise werden hierbei solche Texturmerkmale und/oder Bildmerkmale extrahiert, die in der anschließenden Auswertung einen (besonders genauen) Rückschluss auf die zu untersuchende Substanz bezüglich einer speziellen Anwendung zulassen. Es ist somit bevorzugt, dass die in Schritt v) extrahierten Texturmerkmale und/oder Bildmerkmale auf die Untersuchung der zu untersuchenden Substanz abgestimmt sind.

In Schritt vi) erfolgt schließlich eine Auswertung der in Schritt v) extrahierten Texturmerkmale und/oder Bildmerkmale. Hierbei können anhand der extrahierten Texturmerkmale und/oder Bildmerkmale Rückschlüsse auf die zu untersuchende Substanz (z.B. auf ihre Qualität, auf eine oder mehrere ihrer Eigenschaften, auf ihre Zugehörigkeit zu einer bestimmten Substanzart bzw. Substanzklasse, auf ihre Echtheit und/oder auf ihre chemische Zusammensetzung) getroffen werden. In der Auswertung kann beispielsweise die Änderung bestimmter Texturmerkmale und/oder Bildmerkmale vom ursprünglichen Testmuster (oder einem Referenzbild) zum auf dem bei Anwesenheit der Substanz bzw. der Mischung aufgenommenen Bild bestimmt werden. Zum Beispiel könnte die Änderung eine Länge oder eines Verlaufs einer bestimmten Linie oder die Änderung der Position eines bestimmten Punktes oder zweier bestimmter Punkte zueinander bestimmt werden. Hierbei können z.B. auch Merkmalsvektoren bestimmt werden. Aus der bestimmten Änderung der Texturmerkmale und/oder Bildmerkmale können dann die genannten Rückschlüsse auf die zu untersuchende Substanz getroffen werden, z.B. durch Abgleich mit spezifischen Werten aus einer Datenbank oder durch Abgleich mit in vorherigen Messungen ermittelten Werten. Anstelle von Relativwerten können auch (z.B. ohne Verwendung einer Referenz) Absolutwerte bestimmt werden, welche dann mit spezifischen Werten aus einer Datenbank oder durch Abgleich mit in vorherigen Messungen ermittelten Werten verglichen werden. Die Auswertung in Schritt vi) kann beispielsweise mithilfe einer Software erfolgen, z.B. einem auf dem mobilen elektronischen Gerät installierten Computerprogrammprodukt.

Vorzugsweise ist die in Schritt vi) durchgeführte Auswertung auf die Untersuchung der zu untersuchenden Substanz abgestimmt.

In einer ganz besonders bevorzugten Variante des erfindungsgemäßen Verfahrens sind
- das in Schritt ii) bereitgestellte Testmuster, und/oder
- die in Schritt v) extrahierten Texturmerkmale und/oder Bildmerkmale, und/oder
- die in Schritt vi) durchgeführte Auswertung
auf die Untersuchung der zu untersuchenden Substanz abgestimmt. Diese Abstimmung kann beispielsweise durch eine anwendungsspezifische Optimierung erfolgen. Anwendungsspezifisch bedeutet hierbei, dass eine Anpassung der genannten Verfahrensmerkmale an den Zweck der Untersuchung vorgenommen werden kann. Soll beispielsweise die Qualität von Motoröl untersucht werden, können die genannten Merkmale - d.h. das bereitgestellte Testmuster und/oder das Extrahieren in Schritt v) und/oder die Auswertung in Schritt vi) - so angepasst werden, dass sie besonders für die Untersuchung von Motoröl und für die Bestimmung von dessen Qualität geeignet sind. Zu einer solchen Optimierung kann das erfindungsgemäße Verfahren selbst eingesetzt werden, indem es beispielsweise mehrfach mit verschiedenen bekannten Motorölen durchgeführt wird und dabei durch bestimmte während der Auswertung erfolgende Optimierungsschritte die besonders geeigneten Verfahrensmerkmale herausgefunden werden. Die Bestimmung der Qualität von Motoröl ist hierbei lediglich ein Beispiel. Andere Beispiele wären z.B. die Bestimmung des Fettanteils in Hauttalg oder Haartalg und die Bestimmung des Zuckergehalts in Lebensmitteln bzw. Getränken.

Die Abstimmung bzw. Optimierung der genannten Merkmale - d.h. des bereitgestellten Testmusters und/oder der in Schritt v) extrahierten Texturmerkmale/Bildmerkmale und/oder der Auswertung in Schritt vi) - auf die Untersuchung der zu untersuchenden Substanz kann durch eine mathematische Modellierung erfolgen, bei der vorzugsweise mehrere Schritte iterativ durchlaufen werden. Besonders bevorzugt werden hierbei zunächst eine oder mehrere Messungen mit einer Substanz hinsichtlich einer gewünschten Anwendung an einem oder mehreren Testmustern durchgeführt, anschließend ein mehrere für die Anwendung geeignete Testmuster ausgewählt, daraufhin mehrere Texturmerkmale und/oder Bildmerkmale des/der Testmuster hinsichtlich ihrer Eignung bei der Verwendung in der gewünschten Anwendung untersucht und geeignete davon ausgewählt, anschließend Kombinationen bestimmter (zuvor ausgewählter) Testmuster und Texturmerkmale/Bildmerkmale ermittelt, deren Verwendung bei einer Messung der Substanz und anschließender Auswertung eine signifikante Aussage hinsichtlich der gewünschten Anwendung ermöglichen, wobei die verwendeten Auswertungsschritte hier an die spezifische Kombination von Testmuster und Texturmerkmalen/Bildmerkmalen angepasst bzw. optimiert werden können, um ein möglichst aussagekräftiges Ergebnis zu erhalten, und schließlich eine Festlegung auf eine für die gewünschte Anwendung besonders geeignete spezifische Kombination aus Testmuster, extrahierten Texturmerkmalen/Bildmerkmalen und Auswertung bzw. Auswertungsschritten durchgeführt.

Beispielsweise können bei der Abstimmung bzw. Optimierung der genannten Merkmale - d.h. des bereitgestellten Testmuster und/oder der in Schritt v) extrahierten Texturmerkmale/Bildmerkmale und/oder der Auswertung in Schritt vi) - die folgenden Schritte durchgeführt werden:
1. Erfassung von Messdaten in einer Problemdomain per systematischem Experiment oder systematischen Experimenten,
2. Festlegung möglicher Testmuster (z.B. Unterscheidung, ob Druck oder leuchtendes Muster, je nachdem was in der Applikation realisiert werden kann),
3. Systematische Anwendung von Bildfiltern (d.h. Texturmerkmalen und/oder Bildmerkmalen) sowie Vergleich mit Referenzbild oder (z.B. intern auf dem Gerät abgespeicherter) ursprünglicher Darstellung des Musters,
4. Anlernen eines Detektionssystems auf vorhandenen Kombinationen von Testmuster und Bildfiltern (d.h. Texturmerkmalen und/oder Bildmerkmalen),
5. Ermittlung einer entscheidungsrelevanten Kombination aus Bildfilter (d.h. Texturmerkmalen und/oder Bildmerkmalen) und Testmuster,
6. Festlegung des Testmusters und der Bildfilter (d.h. Texturmerkmale und/oder Bildmerkmale) für die konkrete Realisierung der Technologie für die Problemdomaine,
7. optional: Optimierung und weitere Validierung an erweiterter Datenmenge

Die Punkte 3, 4 und 5 können iterativ mehrfach durchlaufen werden und stellen die eigentliche Optimierung der Testmuster und Bildfilter (d.h. Texturmerkmale und/oder Bildmerkmale) vor dem Hintergrund der konkreten Anwendung dar. Eine solche Optimierung kann auch innerhalb der Auswertung in Schritt vi) des erfindungsgemäßen Verfahrens erfolgen. Hierbei können z.B. die extrahierten Strukturmerkmale und/oder Bildmerkmale auf das Testmuster und/oder die zu untersuchende Substanz optimiert werden.

Zu Merkmalserfassung können beispielsweise eine oder mehrere der folgenden Bildfilteroperationen verwendet werden:
1) Bildoperation zur Bewertung der globalen Bildentropie,
2) Bildoperation zur Bewertung der globalen Weichzeichnung (eng. Bluriness) im Bild,
3) Bildoperation zur Bewertung des Mittelwertes, der Standardabweichung und des Kontrastes eines lokalen Bildausschnittes,
4) Bildoperation zur Bewertung der Orientierung und Stärke von Bildkanten (schwarz-weiß Übergänge) mittels, z.B. Gaborfilter,
5) Bildoperation zur Errechnung einer 2D Fourier Transformation zur Bewertung von periodischen Mustern im Bild.

Jedes Bild der problemspezifischen Datenbasis kann mit allen oder einem Teil der genannten Bildoperatoren gefiltert werden. Zur letztendlichen Merkmalsextraktion können die erlangten Bildmerkmale als Absolutwerte, als Relativwerte zu einer vor-Ort Aufnahme des Testmusters mit sauberer Linse, als Relativwerte zu einer intern hinterlegten Aufnahme des Testmusters bei sauberer Linse Verwendung finden. Möglichkeiten eines relativen Vergleiches sind z.B. die Berechnung der pixelweisen Abweichung von Mess- zu Referenzbild mittels mittleren quadratischen Fehlers (MSER) oder der Berechnung der Distanz der Histogramme, gebildet auf dem Mess- sowie dem Referenzbild (beispielsweise Kullback-Leibler Divergenz, Chi-Squared Divergenz).

Beispielsweise können die Parameter eines mathematischen Models mittels eines Lernalgorithmus in der Art adaptiert werden, das der Fehler bei der Vorhersage der Klasse basierend auf dem Merkmalsvektor minimal wird. Hierbei können mehrere Verfahren, z.B. Künstliche Neuronale Netze (KNN), Support Vector Machines (SVM) oder Partial Least Squares (PLS) Modelle auf ihre Tauglichkeit getestet und anhand eines Performanz-Kriteriums ausgewählt werden. Zur Auffindung der optimalen Kombination von Testmuster und Merkmalsextraktion kann anhand der internen Wichtung der Merkmale im mathematischen Modell eine problemspezifische Ordnung der Wichtigkeit der Merkmale vorgenommen werden. Anschließend kann die Modellerstellung systematisch wiederholt werden, wobei sukzessive Merkmale in Reihenfolge ihrer Wichtigkeit zum Eingang des Modells hinzugefügt werden. Dieser Vorgang kann so lange durchgeführt werden, bis eine äquivalente Performanz verglichen mit dem System basierend auf allen Merkmalen erreicht ist. Aus dieser Betrachtung ergibt sich dann eine applikationsspezifische Kombination von Merkmal und Testmuster für die jeweilige Aufgabe.

Mit dem erfindungsgemäßen Verfahren können somit einerseits Substanzen untersucht werden, andererseits kann aber auch die Untersuchung von Substanzen, d.h. das Verfahren an sich, hinsichtlich einer bestimmten Anwendung optimiert werden. Beispielsweise kann das Verfahren zunächst mit einer bekannten Substanz oder mehreren bekannten Substanzen durchgeführt werden. Hierbei kann innerhalb der Auswertung eine Optimierung des Verfahrens auf die bekannte(n) Substanz(en) (oder z.B. auf die Bestimmung einer bestimmten Eigenschaft der Substanzen oder die Qualität der Substanz) vorgenommen werden. Bei dieser Optimierung kann beispielsweise ein bestimmtes Testmuster ermittelt werden, welches besonders für die gewünschte Untersuchung dieser Substanz(en) eignet, und/oder es können bestimmte Texturmerkmale und/oder Bildmerkmale bestimmt werden, die sich besonders für die gewünschte Untersuchung dieser Substanz(en) eignen. Zudem können bei dieser Optimierung auch bestimmte Änderungen von Texturmerkmalen und/oder Bildmerkmalen ermittelt werden, die auf bestimmte Eigenschaften der Substanz hinweisen oder andere Rückschlüsse auf die Substanz ermöglichen. Das auf diese Weise optimierte Verfahren kann dann zur Detektion der Substanz(en) bzw. zur Untersuchung der Substanz(en), z.B. hinsichtlich ihrer Qualität oder bestimmter Eigenschaften, eingesetzt werden.

Im erfindungsgemäßen Verfahren wird die zu untersuchende Substanz nicht spektral analysiert, sondern anhand ihrer Wirkung als optischer Filter, d.h. anhand der durch die zu untersuchende Substanz verursachten Brechung/Beugung (Diffraktion), die als Transmission gemessen werden kann, analysiert. Das physikalische Messprinzip ist damit geometrisch und nicht spektral, und somit weitestgehend unabhängig von schwer steuerbaren Eigenschaften der Beleuchtung und des Umgebungslichtes. Das Messprinzip beruht auf grundlegenden physikalischen Entdeckungen, u.a. der von Christiaan Huygens um 1650 formulierten Wellenoptik, dem Huygens-Fresnelschen Prinzip, dem Kirchhoffschen Beugungsintegral mit dessen zwei Grenzfällen der Fresnel-Beugung (divergierende Punktstrahlungsquelle) und der Fraunhofer-Beugung (parallele Lichtstrahlen als Strahlungsquelle).

Mit dem erfindungsgemäßen Verfahren wird jedoch ein anwendungstaugliches Messverfahren bereitgestellt, welches über die reine Demonstration eines physikalischen Messeffekts hinausgeht. So wird nicht lediglich ein einfacher Bildvergleich zwischen der originalen Darstellung eines beliebigen Musters und einer verzerrten Darstellung des Musters, welche durch Abfotografieren des Musters durch eine mit der zu untersuchenden Substanz versehenen Linse entstanden ist, vorgenommen. Stattdessen wird ein vorzugsweise auf die Untersuchung der zu untersuchenden Substanz abgestimmtes Testmuster verwendet und es erfolgt ein Extrahieren bestimmter Texturmerkmale und deren Auswertung. Auf diese Weise ist es möglich bestimmte Rückschlüsse auf die zu untersuchende Substanz zu treffen.

Da als mobiles elektronisches Gerät beispielsweise ein Smartphone oder ein Tablet-Computer verwendet werden kann, ist zur Durchführung des erfindungsgemäßen Verfahrens keine spezielle Hardware, wie z.B. ein externer Sensor, nötig. Zudem ist das erfindungsgemäße Verfahren weitestgehend unabhängig von der Beleuchtung und bestehendem Umgebungslicht im Hinblick auf den Messeffekt und hat somit deutliche Vorteile gegenüber mobilen spektroskopischen Verfahren. Besonders vorteilhaft ist, dass durch das erfindungsgemäße Verfahren auch die Untersuchung flüssiger, cremeartiger oder gelartiger Substanzen auf einfache Weise ermöglicht wird.

Mit dem erfindungsgemäßen Verfahren wird somit ein Verfahren zur Untersuchung von Substanzen erhalten, mit welchem insbesondere flüssige oder gelartige Substanzen auf möglichst einfache und kostengünstige Weise untersucht werden können.

Das erfindungsgemäße Verfahren kann in zwei verschiedenen Varianten ausgeführt werden.

Die bevorzugte Variante ist eine relative Messung, bei der zusätzlich zu dem in Schritt iv) aufgenommenen Bild, bei dessen Aufnahme sich die zu untersuchende Substanz bzw. die Mischung auf der Kameralinse bzw. dem Schutzelement befindet, ein Referenzbild aufgenommen wird, bei dessen Aufnahme sich die zu untersuchende Substanz bzw. die Mischung nicht auf der Kameralinse bzw. dem Schutzelement befindet (d.h. bei dessen Aufnahme die Linse sauber ist). Beim Extrahieren in Schritt v) oder bei der Auswertung in Schritt vi) können dann die (vorzugsweise berechneten und anwendungsspezifisch optimierten) Strukturmerkmale und/oder Bildmerkmale des bei Vorhandensein der Substanz bzw. der Mischung aufgenommenen Bildes mit den entsprechenden Strukturmerkmalen und/oder Bildmerkmalen des Referenzbildes verglichen werden. Dieses Vorgehen hat grundsätzlich den Vorteil, dass es relativ unabhängig von den Parametern des verwendeten Kamerasystems ist, da diese in beiden Bildern (d.h. dem beim Vorhandensein der Substanz bzw. der Mischung aufgenommenen Bild und dem Referenzbild) enthalten sind, und nur der wirkliche durch die Substanz bzw. die Mischung verursachte Unterschied betrachtet wird. Mit anderen Worten können so durch das Kamerasystem (z.B. Fehler in der Linse) verursachte Unterschiede rausgefiltert werden. Zudem ist diese Variante auch bei vorher unbekannten Testmustern anwendbar.

Die hierzu alternative Variante ist eine absolute Messung, bei der kein Referenzbild aufgenommen wird. Beim Extrahieren in Schritt v) oder bei der Auswertung in Schritt vi) können dann die (vorzugsweise berechneten und anwendungsspezifisch optimierten) Strukturmerkmale und/oder Bildmerkmale des bei Vorhandensein der Substanz bzw. der Mischung aufgenommenen Bildes mit den entsprechenden Strukturmerkmalen und/oder Bildmerkmalen des ursprünglichen Musters verglichen werden, welches z.B. in einem Speicher des mobilen elektronischen Geräts abgespeichert ist. So kann man z.B. eine absolute Unschärfe oder Verzeichnung bestimmen und unter Annahme eines idealen Kamerasystems als Messeffekt verwenden. Mit zunehmend schlechterer Kameraqualität wird dieser Messeffekt zunehmend kompromittiert. Diese Variante hat jedoch den Vorteil, dass nur eine Messung durchgeführt werden muss, und somit ein einfacheres und komfortableres Verfahren resultiert.

Möglichkeiten eines relativen Vergleiches sind z.B. die Berechnung der pixelweisen Abweichung von Mess- zu Referenzbild mittels mittleren quadratischen Fehlers (MSER) oder der Berechnung der Distanz der Histogramme, gebildet auf dem Mess- sowie dem Referenzbild (beispielsweise Kullback-Leibler Divergenz, Chi-Squared Divergenz). Dieser Vorgang erzeugt pro Bild einen mehrelementigen Merkmalsvektor.

Dieses Vorgehen kann systematisch für alle verfügbaren Testmuster durchgeführt werden.

Eine bevorzugte Variante des erfindungsgemäßen Verfahrens zeichnet sich dadurch aus, dass die zu untersuchende Substanz ausgewählt ist aus der Gruppe bestehend aus
a) Flüssigkeiten,
b) eine oder mehrere Flüssigkeiten enthaltenden Gemischen, insbesondere Lösungen, Emulsionen, Suspensionen, flüssige Schäume,
c) Gelen und gelartigen Substanzen,
d) (flüssigen) Sekreten, beispielsweise Talg (z.B. Hauttalg, Haarfett), Schweiß, Speichel, Milch,
e) sowie Mischungen hiervon.

Die genannten Substanzen haben den Vorteil, dass sie sich auf leichte Weise ohne vorherige Vorbehandlung so mit der Kameralinse oder dem Schutzelement in Kontakt bringen lassen, dass ein Teil der Substanz als Film (z.B. Flüssigkeitsfilm, Fettfilm, Gelfilm) auf der Kameralinse bzw. dem Schutzelement verbleibt. Bei den verwendeten Substanzen kann es sich beispielsweise um künstlich hergestellte Substanzen (z.B. Motoröl, kosmetische Cremes, Limonade) oder um natürliche Substanzen (z.B. Blut, Hauttalg, Schweiß, Pflanzenöl, Baumharz, Milch, Fruchtsaft) handeln.

Gemäß einer weiteren bevorzugten Variante des erfindungsgemäßen Verfahrens ist die zu untersuchende Substanz eine Substanz einer bestimmten Substanzart und/oder bestimmten Substanzklasse, wobei
- das in Schritt ii) bereitgestellte Testmuster, und/oder
- die in Schritt v) extrahierten Texturmerkmale und/oder Bildmerkmale, und/oder
- die in Schritt vi) durchgeführte Auswertung
auf die bestimmte Substanzart und/oder bestimmte Substanzklasse der zu untersuchenden Substanz abgestimmt ist.

Eine weitere bevorzugte Variante des erfindungsgemäßen Verfahrens ist dadurch gekennzeichnet, dass
- das in Schritt ii) bereitgestellte Testmuster, und/oder
- die in Schritt v) extrahierten Texturmerkmale und/oder Bildmerkmale, und/oder
- die in Schritt vi) durchgeführte Auswertung
auf mindestens eine Eigenschaft der zu untersuchenden Substanz abgestimmt ist, wobei die mindestens eine Eigenschaft ausgewählt ist aus der Gruppe bestehend aus Transparenz der Substanz, Lichtstreuung der Substanz, Lichtbrechung der Substanz, Farbveränderungen der Substanz und deren lokale Verläufe, sowie Kombinationen hiervon.

Eine weitere bevorzugte Variante des erfindungsgemäßen Verfahrens zeichnet sich dadurch aus, dass zusätzlich mindestens ein Referenzbild des Testmusters mithilfe der Kamera aufgenommen wird, während sich die zu untersuchenden Substanz oder Mischung nicht auf der Kameralinse oder dem Schutzelement befindet. Hierbei sollte sich vorzugsweise auch keine andere Substanz auf der Kameralinse oder dem Schutzelement befinden, d.h. die Kameralinse und/oder das Schutzelement sollten sauber sein. Durch diese bevorzugte Variante kann eine relative Messung durchgeführt werden. Somit können beim Auswählen der zu extrahierenden Strukturmerkmale/Bildmerkmale und/oder beim Extrahieren in Schritt v) und/oder bei der Auswertung in Schritt vi) die Strukturmerkmale und/oder Bildmerkmale des bei Vorhandensein der Substanz bzw. der Mischung aufgenommenen Bildes mit den entsprechenden Strukturmerkmalen und/oder Bildmerkmalen des Referenzbildes verglichen werden. Dieses Vorgehen hat grundsätzlich den Vorteil, dass es relativ unabhängig von den Parametern des verwendeten Kamerasystems ist, da diese in beiden Bildern (d.h. dem beim Vorhandensein der Substanz bzw. der Mischung aufgenommenen Bild und dem Referenzbild) enthalten sind, und nur der wirkliche durch die Substanz bzw. die Mischung verursachte Unterschied betrachtet wird. Mit anderen Worten können so durch das Kamerasystem (z.B. Fehler in der Linse) verursachte Unterschiede rausgefiltert werden. Zudem ist diese Variante auch bei vorher unbekannten Testmustern anwendbar.

Gemäß einer weiteren bevorzugten Variante des erfindungsgemäßen Verfahrens ist das (in Schritt ii) bereitgestellte) Testmuster ein skaleninvariantes Muster, vorzugsweise ein Fraktal, und/oder ein rotationsymmetrisches Muster. Die Verwendung eines skaleninvarianten Musters ist vorteilhaft, da der Abstand zwischen Kamera und Testmuster in realen Smartphone-basierten Anwendungen nicht immer gleich sein wird. Die Durchführung des Verfahrens wird somit noch einfacher, da nicht speziell auf den Abstand zwischen Kamera und Testmuster geachtet werden muss. Bei der Verwendung von Fraktalen hätte man ein zyklisches Grundmuster in variabler Skale. Die Eigenschaften des Musters sowie dessen Skale plus die Eigenschaften der verwendeten Merkmale sind vorzugsweise auf die (stofflichen) Eigenschaften der zu untersuchenden Substanz optimiert. Die Verwendung eines rotationssymmetrischen Musters hat den Vorteil, dass bei der Aufnahme des Bildes vom Testmuster nicht auf den Winkel (Rotation) der Kamera zum Testmuster geachtet werden muss. Auch hierdurch wird das erfindungsgemäße Verfahren vereinfacht.

Beispielsweise kann als Testmuster ein Siemensstern oder ein Strichcode oder ein QR-Code verwendet werden.

Die Verwendung eines skaleninvarianten Testmusters, wie z.B. eines Siemenssterns, ist besonders dann von Vorteil, wenn auf der Kameralinse der Kamera des mobilen elektronischen Geräts oder auf dem vor der Kameralinse angeordneten Schutzelement eine fettabweisende Beschichtung angeordnet ist. Smartphones verschiedener Hersteller bzw. Modelle weisen zunehmend eine sog. fettabweisende Beschichtung auf. Mit entsprechender digitaler Mikroskopie der fettigen Oberfläche verschiedener Smartphone-Linsen konnte im Rahmen der vorliegenden Erfindung festgestellt werden, dass der Effekt dieser Beschichtungen primär dazu führt, die Mikropartikelgröße der Fettinseln so zu gestalten, dass vor dem Hintergrund der tatsächlichen Ortsauflösung der Kamera eine Sichtbarkeit des Fettfilmes auf der Linse in aufgenommenen Bildern minimiert wird. Mit anderen Worten, das auf der Linse befindliche Fett wird nicht weniger, sondern die Größe und örtliche Verteilung der Fettinseln wird durch eine auf die Linsenoberfläche aufgebrachte Mikrostruktur verändert. Durch Verwendung skaleninvarianter Muster, z.B. Siemensstern, als Testmuster, die eine systematische örtlich variierende Auflösung geometrischer Strukturen aufweisen, wird durch diese Oberflächenbeschichtung der Linsenhersteller der im erfindungsgemäßen Verfahren genutzte Messeffekt nicht ruiniert, solange derartige Muster und vorzugsweise Smartphone-spezifische Software (z.B. Kalibrationsmodelle) für jeweils Gruppen von Smartphones mit gleichen / ähnlichen Linseneigenschaften verwendet werden. Hierfür können in das elektronische Gerät separate Parameter der Datenverarbeitung implementiert sein.

Eine weitere bevorzugte Variante des erfindungsgemäßen Verfahrens zeichnet sich dadurch aus, dass
- das mobile elektronische Gerät eine Vorrichtung zur Erzeugung von Blitzlicht umfasst und das Testmuster beim Aufnehmen des Bildes in Schritt iv) mithilfe der Vorrichtung zur Erzeugung von Blitzlicht beleuchtet wird, und/oder
- das Testmuster beim Aufnehmen des Bildes in Schritt iv) durch Umgebungslicht, beispielsweise Tageslicht und/oder Licht aus einer externen Lichtquelle, beleuchtet wird.

Durch die Verwendung einer Vorrichtung zur Erzeugung von Blitzlicht ist das erfindungsgemäße Verfahren komplett unabhängig von den äußeren Beleuchtungsverhältnissen. Da Smartphones in der Regel eine Blitzlichtvorrichtung aufweisen, sind diese besonders als mobiles elektronisches Gerät im erfindungsgemäßen Verfahren geeignet.

Eine weitere bevorzugte Variante des erfindungsgemäßen Verfahrens ist dadurch gekennzeichnet, dass das Testmuster zumindest bereichsweise elektromagnetische Strahlung im Wellenlängenbereich von 1 nm bis 100000 nm, vorzugsweise von 10 nm bis 10000 nm, abgibt, wobei die elektromagnetische Strahlung vorzugsweise ausgewählt ist aus der Gruppe bestehend aus Strahlung aus dem sichtbaren Wellenlängenbereich, Strahlung aus dem nahen UV-Bereich, Strahlung aus dem IR-Bereich und Kombinationen sowie Mischungen hiervon.

Vorzugsweise ist das Testmuster ein zumindest bereichsweise fluoreszierendes Testmuster.

Die Testmuster können auch aus (anwendungsspezifisch angeordneten und spektral ausgewählten) Lichtquellen (Punkt oder Flächenlicht) bestehen, also nicht extern (Blitzlicht des Smartphones oder Umgebungslicht oder Kombination beider Beleuchtungen) beleuchtet, sondern aktiv (selbst-)leuchtende oder fluoreszierende Muster oder Teile des gesamten Musters (Kombination aus aktiven und passiven Mustern/Musterteilen). Dabei können sowohl die externe als auch die aktive Beleuchtung im für den Menschen sichtbaren Wellenlängenbereich oder im nahen ultraviolett (UV) bzw. infrarot (IR) Bereich liegen. Bereits jetzt sind moderne Smartphones teilweise mit Beleuchtung und Kameras außerhalb des für den Menschen sichtbaren Wellenlängenbereiches (z.B. IR) ausgestattet. Hierbei wird nochmals darauf hingewiesen, dass auch bei Verwendung nicht sichtbaren Lichtes oder Lichtanteilen (extern oder aktiv) mit dem erfindungsgemäßen Verfahren keine spektrale Messung durchgeführt, sondern eine Messung/Bewertung geometrischer Eigenschaften, die jedoch in anderen Wellenlängenbereichen einen besseren Messeffekt aufweisen können.

Eine weitere bevorzugte Variante des erfindungsgemäßen Verfahrens zeichnet sich dadurch aus, dass bei der Auswertung in Schritt vi) die extrahierten Texturmerkmale und/oder Bildmerkmale auf das Testmuster optimiert werden, wobei hierbei vorzugsweise eine Änderung der Distanz von Merkmalshistogrammen (zwischen Messung einer Referenz - d.h. ohne Substanz - und Messung mit Substanz) oder (z.B. im Falle einer punktförmigen Beleuchtung) eine Punktspreizfunktion (Point-Spread-Function) berechnet wird.

Weiterhin ist es bevorzugt, dass die Optimierung durch einen iterativen Prozess erfolgt, bei welchem das Testmuster und die Texturmerkmale und/oder Bildmerkmale getestet werden, wobei deren Kombination durch Selektion auf ihre anwendungsspezifische Eignung hin algorithmisch und numerisch überprüft wird.

Die Optimierung der Kombination von geeigneten Testmustereigenschaften und errechneten Texturmerkmalen und/oder Bildmerkmalen wird vorzugsweise durch einen iterativen Prozess des Tests von Grundmustern und einer breiten Palette von Texturmerkmalen durchgeführt, deren Kombination durch Selektion auf ihre anwendungsspezifische Eignung hin algorithmisch und numerisch überprüft wird. Konkret bedeutet das, (1) Test an (nicht-optimierten, allgemeinen) Grundmustern, die nur eine Eigenschaft erfüllen, (2) Bewertung einer breiten Palette an Merkmalen auf Differenzierbarkeit im Kontext der spezifischen Messaufgabe, (3) Test von Kombinationsmustern, die mehr als eine Eigenschaft beinhalten, (4) erneute Bewertung der Palette an sukzessive spezifischen Merkmalen auf Differenzierbarkeit im Kontext der spezifischen Messaufgabe. Die Iteration aus (1) bis (4) wird vorzugsweise mindestens einmal, besonders bevorzugt mehrfach durchlaufen.

Gemäß einer weiteren bevorzugten Variante des erfindungsgemäßen Verfahrens ist der mindestens eine Hilfsstoff ausgewählt aus der Gruppe bestehend aus Lösungsmitteln, Lösungsvermittlern, Konsistenzreglern, Gelbildnern, Emulgatoren, Benetzungsmitteln, Flussmitteln, Farbstoffen, Farbpigmenten, Fluoreszenzmitteln, sowie Mischungen hiervon. Durch die Verwendung von Hilfsstoffen wie Lösungsmitteln, Lösungsvermittlern, Konsistenzreglern, Gelbildnern, Emulgatoren, Benetzungsmitteln, Flussmitteln kann beispielsweise das in-Kontakt-Bringen der zu untersuchenden Substanz mit der Kameralinse bzw. dem Schutzelement erleichtert werden. Durch Benetzungsmittel und/oder Flussmittel kann insbesondere auch eine gleichmäßigere örtliche Verteilung der zu untersuchenden Substanz oder die Reduzierung der Oberflächenspannung erreicht werden, wodurch die Messung jeweils deutlich verbessert werden kann. Auch kann durch die genannten Hilfsstoffe die Transparenz oder der Brechungsindex so verändert werden, dass die Aufnahme des Bildes besser erfolgen kann. Durch Farbstoffe, Farbpigmente und Fluoreszenzmittel kann die Transparenz, der Kontrast bzw. die Lichtstreuung gezielt verändert werden, so dass die Aufnahme des Bildes besser erfolgen kann.

Als eine weitere bevorzugte Variante besteht die Möglichkeit innerhalb der vorgeschlagenen Erfindung, die Kombination aus Muster und Merkmalsverarbeitung sowohl auf annähernd homogen auftretenden Eigenschaften der zu untersuchenden Substanz zu verwenden (z.B. Öl/ Fett), als auch auf wegen hoher Oberflächenspannung sehr punktuell auftretender Substanzen (z.B. Wassertropfen). So kann beispielsweise die geometrische Form (insb. Größe) eines einzelnen Tropfens oder die geometrische Anordnung vieler kleiner Tropfen auf der Kameralinse bzw. dem Schutzelement sich in Abhängigkeit von der Oberflächenspannung und diese wiederum in Abhängigkeit von den chemischen Eigenschaften der zu untersuchenden Substanz ändern. Illustrativ, jedoch nicht einschränkend, seien hier Lotuseffekt und Kristallisation (nicht zwangsweise bei Temperaturen unter 0 °C) genannt. Es kann in diesem Fall eine Optimierung von Muster und Merkmalen zusätzlich oder ausschließlich auf diese Eigenschaften erfolgen.

Eine weitere bevorzugte Variante des erfindungsgemäßen Verfahrens zeichnet sich dadurch aus, dass bei oder durch die Auswertung in Schritt vi)
- die Qualität der zu untersuchenden Substanz bestimmt wird, und/oder
- mindestens eine Eigenschaft der zu untersuchenden Substanz bestimmt wird, und/oder
- die Zugehörigkeit der zu untersuchenden Substanz zu einer bestimmten Substanzart und/oder Substanzklasse bestimmt wird, und/oder
- die Echtheit der zu untersuchenden Substanz bestimmt wird, und/oder
- die chemische Zusammensetzung der zu untersuchenden Substanz bestimmt wird.

Vorzugsweise ist das mobile elektronische Gerät ein Smartphone oder ein Tablet-Computer. Auf diese Weise wird eine besonders einfache Durchführung des erfindungsgemäßen Verfahrens ermöglicht, da es sich bei diesen um sehr einfach zu bedienende, den meisten Anwendern sehr vertraute und leicht zugängliche Geräte handelt.

Für das erfindungsgemäße Verfahren ergibt sich eine ganze Reihe von Anwendungen, die hier genannt werden, aber nicht einschränkend wirken sollen.

So z.B. eine Anwendung, in der man den Ölmessstab aus dem PKW-Motor herauszieht und mit der Smartphonekamera antippt (ggf. über einen Lappen) und sieht, ob der Motor einen Ölwechsel benötigt oder nicht. Die Eigenschaften des Öls ändern sich mit dessen Laufleistung, ggf. hat man sogar Abrieb-Partikel enthalten. Dies sollte alles zu Diffraktion führen.

Eine weitere Anwendung ist die Bewertung qualitätsgebender Eigenschaften von Speiseöl. Hierzu wird ein Tropfen Speiseöl auf ein Stück Küchentuch oder ähnlich geeignetes Papier / Textil gegeben, das durch ein Aufsaugen der Flüssigkeit eine möglichst gleichmäßige örtliche Verteilung herbeiführt. Auf diesen Fleck wird die Linse der Kamera des Smartphone getippt und die o.g. Messung eines geeigneten Referenzmusters durchgeführt. Im Rahmen der Erfindung konnte gezeigt werden, dass sich handelsübliche Speiseöle unterscheiden lassen, sogar Öle untereinander aus der gleichen Art Früchte, wie z.B. Olivenöl.

Eine weitere Anwendung ist die Bewertung wesentlicher chemischer Komponenten auf der Oberfläche von Haut und Haaren (z.B. Talg, insb. Fett, Feuchtigkeit) und die darauf basierende Ableitung von personalisierten Empfehlungen kosmetischer Pflegeprodukte und/oder Handlungsempfehlungen zum Umgang mit Haut und Haaren (z.B. Häufigkeit des Waschens).

Im Bereich der Lebensmittel lassen sich damit potentiell wesentliche Eigenschaften (z.B. Zucker) bestimmen.

Auf einer höheren Abstraktionsebene formuliert können Kategorien von Anwendungen genannt werden:
- Anwendungen, die primär auf eine Qualitätsbewertung der zu untersuchenden Substanz abzielen, entweder quantitativ (kontinuierliche Maßzahl) oder qualitativ (Einteilung in Klassen/Gruppen);
- Anwendungen, die primär der Unterscheidung von Substanzen bzw. Objekten anhand ihrer chemischen Eigenschaften abzielen, unabhängig davon, ob diese Unterscheidung ein Qualitätsmerkmal darstellt;
- Anwendungen, die primär auf das Erkennen der Echtheit bzw. von Fälschungen abzielen, entweder anhand der natürlich auftretenden chemischen Zusammensetzung der Probe oder durch gezieltes Einbringen zusätzlicher Substanzen, die als eine Art künstliche Signatur den o.g. Messeffekt unterstützen. Während in den vorgenannten zwei Anwendungen davon auszugehen ist, dass die Definition/Beschreibung der Klassen a-priori bekannt ist (Binär- oder Multiklassifikation), besteht hier die Aufgabe einer Abgrenzung einer bekannten Klasse gegen einen unbekannten Rest (unbekannte Fälschungen, 1-vs.-Rest-Klassifikation).

Die vorliegende Erfindung betrifft auch ein Computerprogrammprodukt, gemäß dem beigefügten Anspruch 14, zur Verwendung im erfindungsgemäßen Verfahren, wobei das Computerprogrammprodukt direkt in einen internen Datenspeicher des in Schritt i) bereitgestellten mobilen elektronischen Geräts geladen werden kann und Softwareabschnitte umfasst, mit denen zumindest die Schritte v) und vi) (des erfindungsgemäßen Verfahrens), vorzugsweise die Schritte iv), v) und vi) (des erfindungsgemäßen Verfahrens), ausgeführt werden, wenn das Computerprogramm auf dem mobilen elektronischen Gerät läuft.

Weiterhin betrifft die vorliegende Erfindung ein mobiles elektronisches Gerät, gemäß dem beigefügten Anspruch 15, auf welchem ein erfindungsgemäßes Computerprogrammprodukt installiert ist, wobei das mobile elektronische Gerät vorzugsweise ein Smartphone oder ein Tablet-Computer ist. Bei diesem mobilen elektronischen Gerät handelt es sich dann um das im Verfahren verwendetet mobile elektronische Gerät.

Die vorliegende Erfindung wird anhand der nachfolgenden Figuren und Beispiele näher erläutert, ohne die Erfindung auf die speziell dargestellten Parameter zu beschränken.

### Beispiele für Testmuster

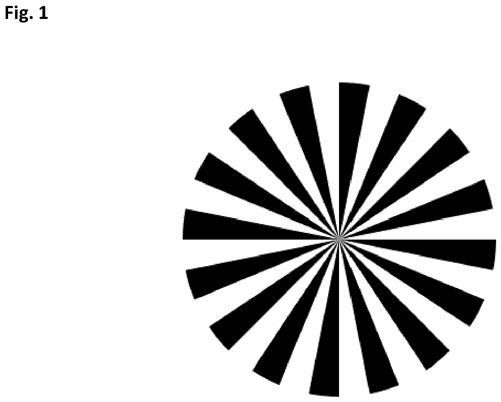

Grundsätzlich sind die Gruppe der Fraktale sehr geeignete Testmuster. Ein besonders geeignetes und anschauliches Ausführungsbeispiel für ein Testmuster ist der sogenannte Siemensstern, welcher beispielhaft in Fig. 1 dargestellt ist. Dieser vereint wesentliche der o.g. bevorzugten Eigenschaften des zu verwendenden Testmusters, u.a.
1) im Hinblick auf gerade, in unterschiedlichen Winkeln verlaufende scharfe (kontrastreiche) Kanten, die durch den Messeffekt verändert werden;
2) im Hinblick auf Rotationsinvarianz, die eine bestimmte Ausrichtung zwischen Messmuster und Kamerasystem in weiten Grenzen überflüssig macht;
3) im Hinblick auf unterschiedliche Skalen, an denen man den Messeffekt besonders gut erkennen kann, z.B. durch Verschwimmen / Verschmieren der schwarzen und weißen Sektoren abhängig von deren Abstand zueinander entlang deren Verlaufes vom Mittelpunkt zum Rand;
4) im Hinblick auf unterschiedliche Skalen, die eine Größeninvarianz herbeiführen und somit einen festen Abstand zwischen Messmuster und Kamerasystem in weiten Grenzen überflüssig macht.

Ein weiteres geeignetes Ausführungsbeispiel für ein mögliches Testmuster sind Strichcodes oder noch besser QR-Codes. Diese liefern häufig, insbesondere im Falle von QR-Codes, zumindest eingeschränkt die Eigenschaft der Skalen- und Größeninvarianz (durch unterschiedlich große Kästchen) und bei feiner Struktur und Auflösung eine gewisse Rotationsinvarianz. Im Hinblick auf die Anwendung der beschriebenen Erfindung im Konsumentenbereich ist als besonders vorteilhaft hervorzuheben, dass derartige Codes in der Regel bereits auf Verpackungen oder Beiblättern / Beschreibungen vorhanden sind, und eine Änderung dieser bei der Verwendung der beschriebenen Erfindung nicht erforderlich ist. Somit ist eine explizite Bereitstellung eines dedizierten Messmusters nicht erforderlich. In diesem Ausführungsbeispiel beschränkt sich die beschriebene Optimierung auf anwendungsspezifische Bildfilter / Texturmerkmale. Als Erweiterung kann man derartige Codes jedoch so gestalten, dass sie einerseits ihren ursprünglichen Zweck der Bereitstellung leicht maschinenlesbarer Information erfüllen, und andererseits z.B. durch redundante Codierung und daraus resultierender höherer filigraner Auflösung deren Nutzung als Messmuster im Rahmen der vorgeschlagenen Erfindung unterstützen.

Ein weiteres geeignetes Ausführungsbeispiel ist die Verwendung von Text, bevorzugt in unterschiedlichen Schriftgrößen. Durch die Erkennung und gezielte Bewertung bestimmter Zeichen (Buchstaben und Zahlen) und deren gestörte Abbildung, hervorgerufen durch den Messeffekt, kann eine anwendungsspezifische Optimierung erreicht werden. Auch hier gilt grundsätzlich das im Zusammenhang mit QR- und Strichcodes Genannte, insbesondere die leichte Verfügbarkeit bei Anwendungen im Konsumentenbereich.

Auch wenn bei einigen der Ausführungsbeispiele, insbesondere dem letztgenannten, die optimierte Gestaltung des eigentlichen Messmusters auf die Anwendung nicht gegeben ist, ist die Bewertung der grundsätzlichen Verwendbarkeit im Rahmen einer bestimmten Anwendung letztlich auch ein Teil der Optimierung des Messmusters und somit Bestandteil der vorgeschlagenen Erfindung.

### Ausführungsbeispiel: Szenario Motorölmessung

In diesem Ausführungsbeispiel wird das erfindungsgemäße Verfahren zur Untersuchung von (in einem Motor eines Kraftfahrzeugs befindlichen und dort bereits gebrauchtem) Motoröl eingesetzt, um einen Rückschluss über die Qualität des Motoröls zu treffen und entscheiden zu können, ob ein Wechsel des Motoröls bereits notwendig ist oder noch nicht.

Hierfür wird vom Nutzer zunächst ein Smartphone oder ein Tablet-Computer bereitgestellt, welches eine Kamera mit einer Kameralinse aufweist. Der Nutzer zieht den Ölmessstab aus dem Motor heraus und reibt dann mit einem Papiertaschentuch oder anderen Wischelement Öl vom Ölmessstab ab und dann auf die Kameralinse des Smartphones oder Tablet-Computers auf. Hierdurch bildet sich Film des Motoröls auf der Kameralinse des Smartphones oder Tablet-Computers, ohne dass das Smartphone bzw. der Tablet-Computer in Mitleidenschaft gezogen wird.

Nachfolgend (d.h. während sich der Film des Motoröls auf der Kameralinse befindet) fotografiert der Nutzer das Testmuster, welches z.B. als Druck auf der Ölflasche oder auf dem Papieranhänger, der typischerweise beim Ölwechsel am Messstab befestigt wird, bereitgestellt wird oder selbst aus dem Internet ausgedruckt wurde. Mit einer im Smartphone oder Tablet Computer hinterlegten numerischen Verarbeitungspipeline, bestehend aus einer Extraktion von Texturmerkmalen aus dem aufgenommenen Bild, die sich von den entsprechenden Texturmerkmalen des ursprünglichen Testmusters unterscheiden, und einer Auswertung in Form eines mathematischen Detektionsmodells, wird der Ölfilm mittels Dreiklassensystem nach einem Ampelsystem bewertet, grün = Öl im Normalzustand, gelb = Wechsel empfohlen, rot = Wechsel notwendig.

Zur Erreichung der numerischen Verarbeitungspipeline kann im Vorfeld (z.B. durch den Entwickler des Detektionssystems) eine repräsentative Stichprobe von verschiedenen marktüblichen Motorölen in verschiedenen Alterungsstufen innerhalb einer Messkampagne erhoben werden. Zusätzlich können von einem Experten für Motortechnik die erfassten Referenzproben mittels Labortechnik bewertet werden, um die "Grundwahrheit" für das Detektionssytem zu erstellen, auf Basis dessen jede Probe mit in das oben genannte Klassensystem eingeteilt werden kann.

Dem Entwickler stehen zur Merkmalserfassung eine Reihe von Bildfilteroperationen zur Verfügung, z.B.
1) Bildoperation zur Bewertung der globalen Bildentropie,
2) Bildoperation zur Bewertung der globalen Weichzeichnung (eng. Bluriness) im Bild,
3) Bildoperation zur Bewertung des Mittelwertes, der Standardabweichung und des Kontrastes eines lokalen Bildausschnittes,
4) Bildoperation zur Bewertung der Orientierung und Stärke von Bildkanten (schwarz-weiß Übergänge) mittels, z.B. Gaborfilter,
5) Bildoperation zur Errechnung einer 2D Fourier Transformation zur Bewertung von periodischen Mustern im Bild.

Jedes Bild der problemspezifischen Datenbasis wird mit allen oder einem Teil der genannten Bildoperatoren gefiltert. Zur letztendlichen Merkmalsextraktion können die erlangten Bildmerkmale
1) als Absolutwerte,
2) als Relativwerte zu einer vor-Ort Aufnahme des Testmusters mit sauberer Linse,
3) als Relativwerte zu einer intern hinterlegten Aufnahme des Testmusters bei sauberer Linse

Verwendung finden. Möglichkeiten eines relativen Vergleiches sind z.B. die Berechnung der pixelweisen Abweichung von Mess- zu Referenzbild mittels mittleren quadratischen Fehlers (MSER) oder der Berechnung der Distanz der Histogramme, gebildet auf dem Mess- sowie dem Referenzbild (beispielsweise Kullback-Leibler Divergenz, Chi-Squared Divergenz).

Dieser Vorgang erzeugt pro Bild einen mehrelementigen Merkmalsvektor. Mittels eines Lernalgorithmus werden dann die Parameter eines mathematischen Models in der Art adaptiert, das der Fehler bei der Vorhersage der Klasse basierend auf dem Merkmalsvektor minimal wird. Hier werden mehrere Verfahren, z.B. Künstliche Neuronale Netze (KNN), Support Vector Machines (SVM) oder Partial Least Squares (PLS) Modelle auf ihre Tauglichkeit getestet und anhand eines Performanz-Kriteriums ausgewählt.

Dieses Vorgehen kann systematisch für alle verfügbaren Testmuster durchgeführt werden.

Zur Auffindung der optimalen Kombination von Testmuster und Merkmalsextraktion wird anhand der internen Wichtung der Merkmale im mathematischen Modell eine problemspezifische Ordnung der Wichtigkeit der Merkmale vorgenommen. Anschließend wird die Modellerstellung systematisch wiederholt, bei der sukzessive Merkmale in Reihenfolge ihrer Wichtigkeit zum Eingang des Modells hinzugefügt werden. Dieser Vorgang wird so lange durchgeführt, bis eine äquivalente Performanz verglichen mit dem System basierend auf allen Merkmalen erreicht ist.

Aus dieser Betrachtung ergibt sich die applikationsspezifische Kombination von Merkmal und Testmuster für die Aufgabe, z.B. der Klassifikation auf Ölwechselnotwendigkeit.

## Patentansprüche

1. Verfahren zur Untersuchung von Substanzen, bei welchem
i) ein mobiles elektronisches Gerät bereitgestellt wird, welches eine Kamera mit einer Kameralinse aufweist,
ii) ein Testmuster bereitgestellt wird,
iii) eine zu untersuchende Substanz oder eine Mischung einer zu untersuchenden Substanz und mindestens eines Hilfsstoffs mit der Kameralinse oder mit einem auf oder vor der Kameralinse angeordneten Schutzelement in Kontakt gebracht wird, so dass sich ein Film der zu untersuchenden Substanz bzw. der Mischung auf der Kameralinse bzw. dem Schutzelement bildet,
iv) mindestens ein Bild des Testmusters mithilfe der Kamera aufgenommen wird, während sich der Film der zu untersuchenden Substanz bzw. der Mischung auf der Kameralinse bzw. dem Schutzelement befindet, wobei das aufgenommene Bild des Testmusters eine zumindest teilweise verzerrte Darstellung des Testmusters zeigt, wobei sich zumindest ein Teil von Texturmerkmalen und/oder Bildmerkmalen der zumindest teilweise verzerrten Darstellung des Testmusters von den entsprechenden Texturmerkmalen und/oder Bildmerkmalen des ursprünglichen Testmusters unterscheidet,
v) zumindest ein Teil der sich unterscheidenden Texturmerkmale und/oder Bildmerkmale aus dem aufgenommenen Bild des Testmusters extrahiert wird, und
vi) eine Auswertung der extrahierten Texturmerkmale und/oder Bildmerkmale erfolgt.

2. Verfahren gemäß dem vorhergehenden Anspruch, **dadurch gekennzeichnet, dass** die zu untersuchende Substanz ausgewählt ist aus der Gruppe bestehend aus
a) Flüssigkeiten,
b) eine oder mehrere Flüssigkeiten enthaltenden Gemischen, insbesondere Lösungen, Emulsionen, Suspensionen, flüssige Schäume,
c) Gelen und gelartigen Substanzen,
d) Sekreten,
e) sowie Mischungen hiervon.

3. Verfahren gemäß einem der vorhergehenden Ansprüche, **dadurch gekennzeichnet, dass**
- das in Schritt ii) bereitgestellte Testmuster, und/oder
- die in Schritt v) extrahierten Texturmerkmale und/oder Bildmerkmale, und/oder
- die in Schritt vi) durchgeführte Auswertung
auf die Untersuchung der zu untersuchenden Substanz abgestimmt sind.

4. Verfahren gemäß einem der vorhergehenden Ansprüche, **dadurch gekennzeichnet, dass** die zu untersuchende Substanz eine Substanz einer bestimmten Substanzart und/oder bestimmten Substanzklasse ist, wobei
- das in Schritt ii) bereitgestellte Testmuster, und/oder
- die in Schritt v) extrahierten Texturmerkmale und/oder Bildmerkmale, und/oder
- die in Schritt vi) durchgeführte Auswertung auf die bestimmte Substanzart und/oder bestimmte Substanzklasse der zu untersuchenden Substanz abgestimmt sind.

5. Verfahren gemäß einem der vorhergehenden Ansprüche, **dadurch gekennzeichnet, dass**
- das in Schritt ii) bereitgestellte Testmuster, und/oder
- die in Schritt v) extrahierten Texturmerkmale und/oder Bildmerkmale, und/oder
- die in Schritt vi) durchgeführte Auswertung
auf mindestens eine Eigenschaft der zu untersuchenden Substanz abgestimmt sind, wobei die mindestens eine Eigenschaft ausgewählt ist aus der Gruppe bestehend aus Transparenz der Substanz, Lichtstreuung der Substanz, Lichtbrechung der Substanz, Farbveränderungen der Substanz und deren lokale Verläufe, sowie Kombinationen hiervon.

6. Verfahren gemäß einem der vorhergehenden Ansprüche, **dadurch gekennzeichnet, dass** zusätzlich mindestens ein Referenzbild des Testmusters mithilfe der Kamera aufgenommen wird, während sich die zu untersuchenden Substanz oder Mischung nicht auf der Kameralinse oder dem Schutzelement befindet.

7. Verfahren gemäß einem der vorhergehenden Ansprüche, **dadurch gekennzeichnet, dass** das Testmuster
- ein skaleninvariantes Muster, vorzugsweise ein Fraktal, und/oder ein rotationsymmetrisches Muster ist, und/oder
- ein zumindest bereichsweise fluoreszierendes Testmuster ist.

8. Verfahren gemäß einem der vorhergehenden Ansprüche, **dadurch gekennzeichnet, dass**
- das mobile elektronische Gerät eine Vorrichtung zur Erzeugung von Blitzlicht umfasst und das Testmuster beim Aufnehmen des Bildes in Schritt iv) mithilfe der Vorrichtung zur Erzeugung von Blitzlicht beleuchtet wird, und/oder
- das Testmuster beim Aufnehmen des Bildes in Schritt iv) durch Umgebungslicht, beispielsweise Tageslicht und/oder Licht aus einer externen Lichtquelle, beleuchtet wird.

9. Verfahren gemäß einem der vorhergehenden Ansprüche, **dadurch gekennzeichnet, dass** das Testmuster zumindest bereichsweise elektromagnetische Strahlung im Wellenlängenbereich von 1 nm bis 100000 nm, vorzugsweise von 10 nm bis 10000 nm, abgibt, wobei die elektromagnetische Strahlung vorzugsweise ausgewählt ist aus der Gruppe bestehend aus Strahlung aus dem sichtbaren Wellenlängenbereich, Strahlung aus dem nahen UV-Bereich, Strahlung aus dem IR-Bereich und Kombinationen sowie Mischungen hiervon.

10. Verfahren gemäß einem der vorhergehenden Ansprüche, **dadurch gekennzeichnet, dass** bei der Auswertung in Schritt vi) die extrahierten Texturmerkmale und/oder Bildmerkmale auf das Testmuster optimiert werden, wobei vorzugsweise
- hierbei eine Änderung der Distanz von Merkmalshistogrammen oder eine Punktspreizfunktion berechnet wird, und/oder
- die Optimierung durch einen iterativen Prozess erfolgt, bei welchem das Testmuster und die Texturmerkmale und/oder Bildmerkmale getestet werden, wobei deren Kombination durch Selektion auf ihre anwendungsspezifische Eignung hin algorithmisch und numerisch überprüft wird.

11. Verfahren gemäß einem der vorhergehenden Ansprüche, **dadurch gekennzeichnet, dass** der mindestens eine Hilfsstoff ausgewählt ist aus der Gruppe bestehend aus Lösungsmitteln, Lösungsvermittlern, Konsistenzreglern, Gelbildnern, Emulgatoren, Benetzungsmitteln, Flussmitteln, Farbstoffen, Farbpigmenten, Fluoreszenzmitteln, sowie Mischungen hiervon.

12. Verfahren gemäß einem der vorhergehenden Ansprüche, **dadurch gekennzeichnet, dass** bei der Auswertung in Schritt vi)
- die Qualität der zu untersuchenden Substanz bestimmt wird, und/oder
- mindestens eine Eigenschaft der zu untersuchenden Substanz bestimmt wird, und/oder
- die Zugehörigkeit der zu untersuchenden Substanz zu einer bestimmten Substanzart und/oder Substanzklasse bestimmt wird, und/oder
- die Echtheit der zu untersuchenden Substanz bestimmt wird, und/oder
- die chemische Zusammensetzung der zu untersuchenden Substanz bestimmt wird.

13. Verfahren gemäß einem der vorhergehenden Ansprüche, **dadurch gekennzeichnet, dass** das mobile elektronische Gerät ein Smartphone oder ein Tablet-Computer ist.

14. Computerprogrammprodukt zur Verwendung in einem Verfahren gemäß einem der vorhergehenden Ansprüche, wobei das Computerprogrammprodukt direkt in einen internen Datenspeicher des in Schritt i) bereitgestellten mobilen elektronischen Geräts geladen werden kann und Softwareabschnitte umfasst, mit denen zumindest die Schritte v) und vi), vorzugsweise die Schritte iv), v) und vi), ausgeführt werden, wenn das Computerprogramm auf dem mobilen elektronischen Gerät läuft.

15. Mobiles elektronisches Gerät, auf welchem ein Computerprogrammprodukt gemäß Anspruch 14 installiert ist, wobei das mobile elektronische Gerät vorzugsweise ein Smartphone oder ein Tablet-Computer ist.

## Claims

1. Method for the analysis of substances, in which
i) a mobile electronic device is provided which has a camera with a camera lens,
ii) a test sample is provided,
iii) a substance to be analyzed or a mixture of a substance to be analyzed and at least one additive is brought into contact with the camera lens or with a protective element arranged on or in front of the camera lens, so that a film of the substance to be analyzed or of the mixture forms on the camera lens or the protective element,
iv) at least one image of the test sample is recorded using the camera while the film of the substance to be analyzed or the mixture is on the camera lens or the protective element, the recorded image of the test sample showing an at least partially distorted representation of the test sample, at least some of the texture features and/or image features of the at least partially distorted representation of the test sample differing from the corresponding texture features and/or image features of the original test sample,
v) at least part of the differing texture features and/or image features are extracted from the recorded image of the test sample, and
vi) an evaluation of the extracted texture features and/or image features takes place.

2. Method according to the preceding claim, **characterized in that** the substance to be analyzed is selected from the group consisting of
a) liquids,
b) compositions containing one or more liquids, in particular solutions, emulsions, suspensions, liquid foams,
c) gels and gel-like substances,
d) secretions,
e) and mixtures thereof.

3. Method according to one of the preceding claims, **characterized in that**
- the test sample provided in step ii), and/or
- the texture features and/or image features extracted in step v), and/or
- the evaluation performed in step vi)
are adapted to the analysis of the substance to be analyzed.

4. Method according to one of the preceding claims, **characterized in that** the substance to be analyzed is a substance of a specific substance type and/or specific substance class, wherein
- the test sample provided in step ii), and/or
- the texture features and/or image features extracted in step v), and/or
- the evaluation performed in step vi)
are adapted to the specific substance type and/or specific substance class of the substance to be analyzed.

5. Method according to one of the preceding claims, **characterized in that**
- the test sample provided in step ii), and/or
- the texture features and/or image features extracted in step v), and/or
- the evaluation performed in step vi)
are adapted to at least one property of the substance to be analyzed, wherein the at least one property is selected from the group consisting of transparency of the substance, light scattering of the substance, refraction of the substance, color changes of the substance and their local gradients, as well as combinations thereof.

6. Method according to any one of the preceding claims, **characterized in that** additionally at least one reference image of the test sample is recorded by means of the camera while the substance to be analyzed or mixture is not on the camera lens or the protective element.

7. Method according to one of the preceding claims, **characterized in that** the test sample
- is a scale-invariant pattern, preferably a fractal, and/or a rotationally symmetric pattern, and/or
- is a test sample that is at least partially fluorescent.

8. Method according to one of the preceding claims, **characterized in that**
- the mobile electronic device comprises an apparatus for generating flash light and the test pattern is illuminated by means of the apparatus for generating flash light when the image is recorded in step iv), and/or
- the test sample is illuminated by ambient light, for example daylight and/or light from an external light source, when recording the image in step iv).

9. Method according to one of the preceding claims, **characterized in that** the test sample emits at least in some areas electromagnetic radiation in the wavelength range from 1 nm to 100,000 nm, preferably from 10 nm to 10,000 nm, the electromagnetic radiation preferably being selected from the group consisting of radiation from the visible wavelength range, radiation from the near UV range, radiation from the IR range and combinations and mixtures thereof.

10. Method according to one of the preceding claims, **characterized in that** in the evaluation in step vi) the extracted texture features and/or image features are optimized to the test pattern, wherein preferably
- a change in the distance of feature histograms or a point spread function is calculated herein, and/or
- the optimization is performed by an iterative process in which the test pattern and the texture features and/or image features are tested, wherein their combination is checked algorithmically and numerically by selection for their application-specific suitability.

11. Method according to any one of the preceding claims, **characterized in that** the at least one additive is selected from the group consisting of solvents, solubilizers, consistency regulators, gelling agents, emulsifiers, wetting agents, flow agents, dyes, colour pigments, fluorescent agents and mixtures thereof.

12. Method according to one of the preceding claims, **characterized in that** during the evaluation in step vi)
- the quality of the substance to be analyzed is determined, and/or
- at least one property of the substance to be analyzed is determined, and/or
- the affiliation of the substance to be analyzed to a specific substance type and/or substance class is determined, and/or
- the authenticity of the substance to be analyzed is determined, and/or
- the chemical composition of the substance to be analyzed is determined.

13. Method according to one of the preceding claims, **characterized in that** the mobile electronic device is a smartphone or tablet computer.

14. Computer program product for use in a method according to any one of the preceding claims, wherein the computer program product can be loaded directly into an internal data memory of the mobile electronic device provided in step i) and comprises software portions with which at least steps v) and vi), preferably steps iv), v) and vi), are executed when the computer program is running on the mobile electronic device.

15. Mobile electronic device on which a computer program product according to claim 14 is installed, wherein the mobile electronic device is preferably a smartphone or a tablet computer.

## Revendications

1. Procédé d'examen de substances, dans lequel
i) un appareil électronique mobile est mis à disposition, qui comprend une caméra avec une lentille de caméra,
ii) un motif de test est mis à disposition,
iii) une substance ou un mélange d'une substance à examiner et au moins un adjuvant est mis en contact avec la lentille de caméra ou avec un élément protecteur disposé devant la lentille de caméra, de sorte qu'un film de la substance à examiner ou du mélange se forme sur la lentille de caméra ou sur l'élément protecteur,
iv) au moins une image du motif de test est enregistrée au moyen de la caméra pendant que le film de substance à examiner ou de mélange se trouve sur la lentille de caméra ou sur l'élément protecteur, dans lequel l'image enregistrée du motif de test présente une représentation au moins partiellement déformée du motif de test, dans lequel au moins une partie des caractéristiques de la texture et/ou caractéristiques de l'image de la représentation déformée du motif de test se distingue des caractéristiques de la texture et/ou caractéristiques de l'image correspondantes du motif de test initial,
v) au moins une partie des caractéristiques de texture et/ou caractéristiques d'image différentes sont extraites de l'image enregistrée du motif de test et
vi) une analyse des caractéristiques de texture et/ou caractéristiques d'image différentes extraites a lieu.

2. Procédé selon la revendication précédente, **caractérisé en ce que** la substance à examiner est sélectionnée dans le groupe constitué de
a) liquides,
b) un ou plusieurs mélanges contenant des liquides, plus particulièrement des solutions, des émulsions, des suspensions, des mousses liquides,
c) gels et substances de types gels,
d) sécrétions,
e) ainsi que des mélanges de ceux-ci.

3. Procédé selon l'une des revendications précédentes, **caractérisé en ce que**
- le motif de test mis à disposition à l'étape ii) et/ou
- les caractéristiques de textures et/ou les caractéristiques d'images extraites à l'étape v) et/ou
- l'analyse effectuée à l'étape vi)
sont adaptés à l'examen de la substance à examiner.

4. Procédé selon l'une des revendications précédentes, **caractérisé en ce que** la substance à examiner est une substance d'un type déterminé de substance et/ou d'une classe de substance déterminée, dans lequel
- le motif de test mis à disposition à l'étape ii) et/ou
- les caractéristiques de textures et/ou les caractéristiques d'images extraites à l'étape v) et/ou
- l'analyse effectuée à l'étape vi)
sont adaptés au type de substance déterminée et/ou à la classe de substance déterminée de la substance à examiner.

5. Procédé selon l'une des revendications précédentes, **caractérisé en ce que**
- le motif de test mis à disposition à l'étape ii) et/ou
- les caractéristiques de textures et/ou les caractéristiques d'images extraites à l'étape v) et/ou
- l'analyse effectuée à l'étape vi)
sont adaptés à au moins une propriété de la substance à examiner, dans lequel l'au moins une propriété est sélectionnée dans le groupe constitué de la transparence de la substance, la diffusion de la lumière de la substance, la réfraction de la lumière de la substance, les variations de couleur de la substance et ses évolutions locales, ainsi que des combinaisons de celles-ci.

6. Procédé selon l'une des revendications précédentes, **caractérisé en ce que**, en outre, au moins une image de référence du motif de test est enregistrée au moyen de la caméra, tandis que la substance ou le mélange à examiner ne se trouve pas sur la lentille de caméra ou l'élément protecteur.

7. Procédé selon l'une des revendications précédentes, **caractérisé en ce que** le motif de test
- est un motif à invariance d'échelle, de préférence une fractale et/ou un motif à symétrie de rotation et/ou
- est un motif de test fluorescent au moins à certains endroits.

8. Procédé selon l'une des revendications précédentes, **caractérisé en ce que**
- l'appareil électronique mobile comprend un dispositif pour la production d'un flash et le motif de test est éclairé lors de l'enregistrement de l'image à l'étape iv) au moyen du dispositif de production de flash et/ou
- le motif de test est éclairé lors de l'enregistrement de l'image à l'étape iv) par la lumière de l'environnement, par exemple la lumière du jour et/ou la lumière provenant d'une source de lumière externe.

9. Procédé selon l'une des revendications précédentes, **caractérisé en ce que** le motif de test émet un rayonnement électromagnétique au moins à certains endroits dans un domaine de longueurs d'ondes de 1 nm à 100000 nm, de préférence de 10 nm à 10000 nm, dans lequel le rayonnement électromagnétique est de préférence sélectionné dans le groupe constitué d'un rayonnement dans le domaine des longueurs d'ondes visibles, d'un rayonnement dans le domaine UV proche, d'un rayonnement dans le domaine IR et de combinaisons ainsi que de mélanges de ceux-ci.

10. Procédé selon l'une des revendications précédentes, **caractérisé en ce que**, lors de l'analyse à l'étape vi), les caractéristiques de texture et/ou les caractéristiques d'image extraites du motif de test sont optimisées, dans lequel, de préférence,
- une variation de la distance entre les histogrammes de caractéristiques ou une fonction d'étalement du point est calculée et/ou
- l'optimisation est effectuée à l'aide d'un processus itératif dans lequel le motif de test et les caractéristiques de texture et/ou les caractéristiques d'image sont testées, dans lequel leur combinaison est vérifiée, par sélection, de manière algorithmique et numérique, en ce qui concerne leur adaptation à l'application spécifique.

11. Procédé selon l'une des revendications précédentes, **caractérisé en ce que** l'au moins un adjuvant est sélectionné dans le groupe constitué de solvants, d'agents solubilisants, de régulateurs de cohérence, d'agents gélifiants, d'agents émulsifiants, d'agents de réticulation, d'agents de fluxage, de colorants, de pigments colorés, d'agents de fluorescence ainsi que de mélanges de ceux-ci.

12. Procédé selon l'une des revendications précédentes, **caractérisé en ce que**, lors de l'analyse à l'étape vi)
- la qualité de la substance à examiner est déterminée et/ou
- au moins une propriété de la substance à examiner est déterminée et/ou
- l'appartenance de la substance à examiner à un type de substance déterminée et/ou à une classe de substance déterminée est déterminée et/ou
- l'authenticité de la substance à examiner est déterminée et/ou
- la composition chimique de la substance à examiner est déterminée.

13. Procédé selon l'une des revendications précédentes, **caractérisé en ce que** l'appareil électronique mobile est un smartphone ou un ordinateur de type tablette.

14. Produit de programme informatique destiné à être utilisée dans un procédé selon l'une des revendications précédentes, dans lequel le produit de programme informatique peut être chargé directement dans une mémoire de données interne de l'appareil électronique mobile mis à disposition à l'étape i) et comprend des portions de logiciel avec lesquelles au moins les étapes v) et vi), de préférence les étapes iv), v) et vi) sont exécutées lorsque le produit de programme informatique s'exécute sur l'appareil électronique mobile.

15. Appareil électronique mobile sur lequel le produit de programme informatique selon la revendication 14 est installé, dans lequel l'appareil électronique mobile est de préférence un smartphone ou un ordinateur de type tablette.
